# EUROPEAN PATENT APPLICATION

(11) **EP 4 037 082 A2**
(43) Date of publication of application: **03.08.2022**
(21) Application number: 21211810.3
(22) Date of filing: 01.12.2021
(51) Int. Cl.: H01M 50/211, H01M 50/242, H01M 50/291, H01M 50/293, H01M 50/503

(54) **BATTERY MODULE**

(30) Priority: 09.12.2020 KR 20200171736
(71) Applicant: SK Innovation Co., Ltd., Seoul 03188 (KR)
(72) Inventor: PARK, Ju Yong, 34124 Daejeon (KR); MA, Myeong Hwan, 34124 Daejeon (KR); LIM, Ji Hoon, 34124 Daejeon (KR)
(74) Representative: Stolmár & Partner Patentanwälte PartG mbB

(57) **Abstract**

A battery module includes a cell stack formed by stacking a plurality of pouch-type battery cells, each of the plurality of pouch-type battery cells including an electrode accommodation portion accommodating an electrode assembly therein, a sealing portion sealing at least a portion of a periphery of the electrode accommodation portion, and electrode leads electrically connected to the electrode assembly, a module housing accommodating the cell stack therein, a bus bar assembly having at least one conductive bus bar electrically connected to the electrode leads, and at least one sealing protective member disposed between sealing portions of adjacent battery cells, wherein the sealing protective member is disposed to be in contact with the sealing portions.

## Description

### CROSS-REFERENCE TO RELATED APPLICATION(S)

This application claims benefit of priority to Korean Patent Application No. 10-2020-0171736 filed on December 9, 2020 in the Korean Intellectual Property Office, the disclosure of which is incorporated herein by reference in its entirety.

### BACKGROUND

### 1. FIELD

The present disclosure relates to a battery module including a plurality of pouch-type battery cells configured as secondary cells.

### 2. DESCRIPTION OF RELATED ART

Unlike primary batteries, secondary batteries may be charged and discharged, and thus may be applied to devices within various fields such as digital cameras, mobile phones, notebook computers, hybrid vehicles, and electric vehicles. Examples of secondary batteries include a nickel-cadmium battery, a nickel-metal hydride battery, a nickel-hydrogen battery, and a lithium secondary battery.

Research into lithium secondary batteries having high energy density and discharge voltage, among the secondary batteries, have been conducted. Recently, lithium secondary batteries have been manufactured and used as pouch type battery cells in which an electrode assembly is accommodated inside a flexible pouch or as prismatic or cylindrical can-type battery cells having rigidity.

In addition, secondary batteries have been widely used not only in small devices such as portable electronic devices but also in medium and large devices such as automobiles and power storage devices. When used in such a medium or large device, a large number of secondary batteries are electrically connected and used in order to increase capacity and output of the entire battery. To this end, a battery module obtained by modularizing a plurality of battery cells is widely used.

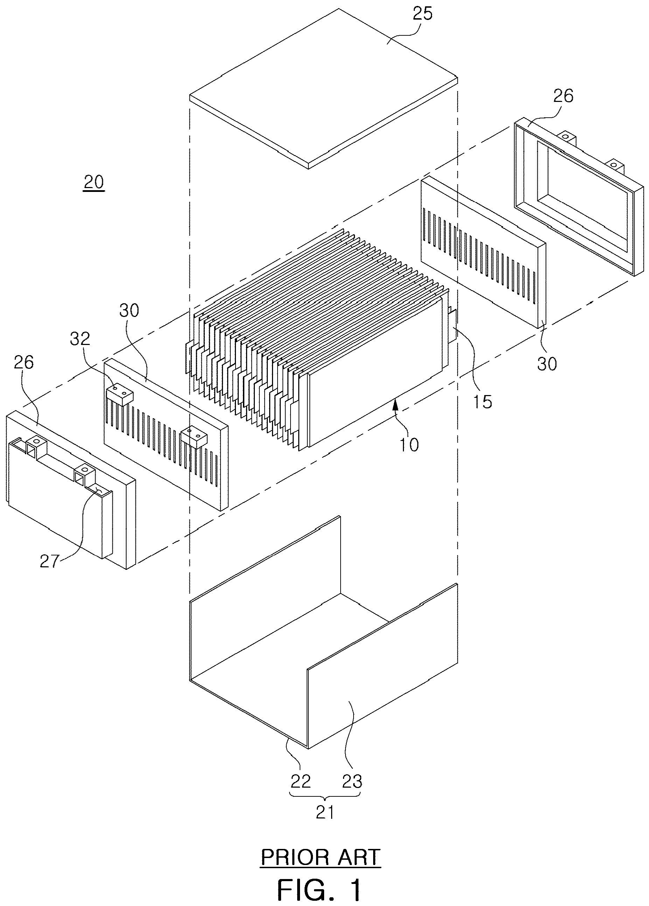

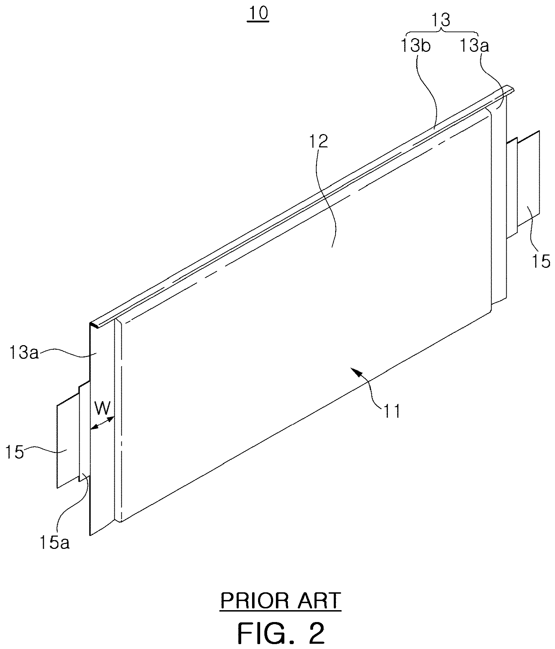

FIG. 1 is an exploded perspective view illustrating an example of a battery module 20 having a pouch-type battery cell 10 according to a related art, and FIG. 2 is a perspective view of the pouch-type battery cell 10 illustrated in FIG. 1.

Referring to FIG. 1, the battery module 20 according to the related art having the pouch-type battery cell 10 includes a plurality of pouch-type battery cells 10 stacked inside module housings 21 and 25. The module housings 21 and 25 include a lower plate 21 including a bottom portion 22 and a side wall portion 23 and having a shape with one side (e.g., upper side) opened and a cover plate 25 covering the opened side of the lower plate 21. The module housings 21 and 25 may have a tubular shape with both ends opened. The opened both ends of the module housings 21 and 25 may be covered by an end plate 26. A bus bar assembly 30 may be provided between an end plate 26 and a cell stack of battery cells 10. The bus bar assembly 30 may include a bus bar (not shown), to which electrode leads 15 of the battery cell 10 is electrically connected, and a connection terminal 32 electrically connected to the bus bar and electrically connected externally. An opening 27 for exposing the connection terminal 32 externally may be formed in the end plate 26.

Referring to FIG. 2, the pouch-type battery cell 10 of the related art may include an electrode assembly (not shown) including a positive electrode plate, a negative electrode plate, and a separator, as well as a pouch (casing) 11 surrounding the electrode assembly. The pouch 11 includes an electrode accommodation portion 12 forming a portion for accommodating the electrode assembly and sealing portions 13 (13a and 13b) formed by bonding peripheral portions of the pouch 11 along at least a portion of a periphery of the electrode assembly.

In addition, the pouch-type battery cell 10 includes electrode leads 15 connected to electrode plates (positive plate, negative plate) of the electrode assembly and an insulating portion 15a disposed in a position of the sealing portions 13 (13a, 13b), from which the electrode leads 15 are drawn out. The electrode leads 15 may protrude to an external surface of the pouch 11 from both ends of the battery cell 10 in a width direction (a length direction) (a left-right direction in FIG. 2).

The pouch-type battery cell 10 according to the related art includes a first sealing portion 13a formed at both ends (both sides) in a width direction (a length direction), and the electrode leads 15 extend externally of the first sealing portion 13a. A second sealing portion 13b is formed at an upper portion of the battery cell 10. Here, it is necessary to maintain the sealing portions 13 (13a, 13b) with a predetermined width and length or greater so as to sufficiently withstand pressure generated inside the battery cell 10 and maintain a sealing structure. To this end, in the pouch-type battery cell 10 according to the related art, a width W of the sealing portion 13 (13a, 13b) is set to be wide by at least 10 to 15 mm or greater.

Meanwhile, the second sealing portion 13b may be bent to improve a sealing degree (sealing performance). However, since the electrode leads 15 connected to the bus bar is exposed externally through the first sealing portion 13a, a bending portion for improving the sealing degree (property, performance) cannot be formed at the first sealing portion 13a. As a result, in the pouch-type battery cell 10 according to the related art, sealing of the first sealing portion 13a is released in at least a portion of the battery cell 10 due to an increase in internal pressure of the battery cell 10, and accordingly, an electrolyte contained inside the pouch 11 may leak externally. In order to prevent this, a width of the first sealing portion 13a may be further increased in order to improve the sealing degree of the first sealing portion 13a. However, in this case, a size of an electrode of the battery cell 10 mounted in the module housings 21 and 25 having the same volume decreases, so that a capacity of the battery cell decreases and energy density of the battery module 20 decreases.

### SUMMARY

Various embodiments of the present disclosure provide a battery module in which sealing of a battery cell is stably maintained.

Various embodiments of the present disclosure provide a battery module capable of sufficiently resisting pressure generated inside a battery cell.

Various embodiments of the present disclosure provide a battery module in which sealing of a battery cell is maintained and pressure inside the battery cell is sufficiently resisted, while a width of a sealing portion of the battery cell is reduced.

Various embodiments of the present disclosure provide a battery module in which energy density increases by effectively utilizing internal space of a module housing.

Various embodiments of the present disclosure provide a battery module in which a sealing portion is prevented from being bent when a cell stack is connected to a bus bar assembly.

According to an aspect of the present disclosure, a battery module includes: a cell stack formed by stacking a plurality of pouch-type battery cells, each of the plurality of pouch-type battery cells including an electrode accommodation portion accommodating an electrode assembly therein, a sealing portion sealing at least a portion of a periphery of the electrode accommodation portion, and electrode leads electrically connected to the electrode assembly; a module housing accommodating the cell stack therein; a bus bar assembly having at least one conductive bus bar electrically connected to the electrode leads; and at least one sealing protective member disposed between sealing portions of adjacent battery cells, wherein the sealing protective member is disposed to be in contact with the sealing portions.

The sealing portion may include a first sealing portion formed in a region from which the electrode leads are exposed externally and a second sealing portion formed in a region from which the electrode leads are not exposed externally, and the sealing protective member may be in contact with the first sealing portion. The first sealing portion may be formed on both side portions of the battery cell in a width direction, and the sealing protective member may be positioned on both sides of the battery cell in the width direction.

The second sealing portion may be formed in at least one of an upper portion and a lower portion of the battery cell, and may include a bending portion bent at least once.

The second sealing portion may be formed in any one of an upper portion and a lower portion of the battery cell, and may include a bending portion bent at least once, and the sealing protective member may be inserted into a space between the sealing portions of adjacent battery cells through a portion in which the bending portion is not formed, from the outside of the battery cell.

The sealing protective member may include a body portion extending in an up-down direction of the battery cell, a plurality of insertion recesses may be formed in an up-down direction from one side of the body portion so that the sealing portion is inserted thereinto, and one side of the body portion may be divided by the plurality of insertion portions, and the other side thereof may have an integrally connected structure.

The sealing protective member may include a contact portion in contact with the first sealing portion, and a width of the contact portion along a width direction of the battery cell in a cross-section, perpendicular to the up-down direction of the battery cell, may have a value of 3 mm or greater and may have a value smaller than a width of the first sealing portion.

The contact portion may be disposed in a region including a region corresponding to a portion of the first sealing portion in which the electrode leads are exposed externally. A height of the contact portion in a cross-section, perpendicular to a width direction of the battery cell, may have a value of 50% or greater than an overall height of the first sealing portion and may have a value smaller than the overall height of the first sealing portion.

The sealing protective member may be disposed to be in close contact with the sealing portion between the sealing portions of the adjacent battery cells. A sealing protective member disposed on the outermost side of the cell stack in a stacked direction of the cell stack, among the sealing protective members, may be supported by an internal surface of the bus bar assembly or an internal surface of the module housing.

The sealing protective member may be press-fit between the sealing portions of adjacent battery cells.

At least an external surface of the sealing protective member may be formed of an insulating material or may be insulation-coated.

The cell stack may include a buffer pad disposed between electrode accommodation portions of adjacent battery cells, and the sealing protective member may have a thickness corresponding to a distance between the sealing portions of adjacent battery cells.

The sealing protective member may include a body portion extending in an up-down direction of the battery cell and a contact portion in contact with the sealing portion from both sides of the body portion in a thickness direction of the battery cell, the contact portion may include two or more portions spaced apart from each other in a width direction of the battery cell, and the sealing protective member may be in contact with two or more portions of the sealing portion. An insertion member having rigidity greater than that of the body portion may be disposed inside the body portion.

A plurality of coupling holes through which the electrode leads penetrate to be coupled may be formed at the bus bar, the bus bar assembly may additionally include an electrically insulating support plate disposed between the electrode accommodation portion and the conductive bus bar to support the bus bar, and a plurality of insertion holes through which the electrode leads penetrate may be formed at the support plate. The sealing protective member may be integrally formed with the support plate. The electrode leads may have a straight shape with an end not bent, and the bus bar assembly and the cell stack may relatively move in a width direction of the battery cell so that the bus bar and the electrode leads are coupled to each other.

According to various embodiments of the present disclosure, the sealing protective member is configured to contact the sealing portion of the battery cell, thereby preventing the sealing portion from being deformed or unsealed by pressure generated inside the battery cell, and thus the effect of stably maintaining the sealing of the cell may be obtained.

In addition, according to various embodiments of the present disclosure, since the sealing protective member supports or is in close contact with the sealing portion of the battery cell, there is an effect that may sufficiently resist the pressure generated inside the battery cell.

Also, according to various embodiments of the present disclosure, since the sealing protective member is configured to contact the sealing portion, the effect of maintaining the sealing of the battery cell and resisting the pressure inside the battery cell, while a width of the sealing portion of the battery cell is reduced, may be obtained. As the width of the sealing portion decreases, a volume of the electrode assembly disposed in the internal space of the module housing having the same size may be increased. Therefore, according to various embodiments of the present disclosure, it is possible to effectively use the internal space of the module housing and to increase energy density of the battery module.

In addition, according to various embodiments of the present disclosure, since the sealing protective member supports the sealing portion, a phenomenon in which the sealing portion is bent by an external force in the process of coupling the electrode leads to the coupling holes of the bus bar when the cell stack is connected to the bus bar assembly may be prevented.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is an exploded perspective view illustrating an example of a battery module having a pouch-type battery cell according to the related art;
FIG. 2 is a perspective view of the pouch-type battery cell illustrated in FIG. 1;
FIG. 3 is a perspective view of a battery module according to an embodiment of the present disclosure;
FIG. 4 is an exploded perspective view of the battery module illustrated in FIG. 3;
FIG. 5 is a perspective view of a pouch-type battery cell illustrated in FIG. 4;
FIG. 6 is a perspective view illustrating a coupling relationship between a cell stack and a sealing protective member illustrated in FIG. 4;
FIG. 7 is a front view of a combination of the cell stack and the sealing protective member illustrated in FIG. 6 from a plane, perpendicular to a length direction of the cell stack;
FIG. 8 is a perspective view illustrating a bus bar assembly, a cell stack, and a sealing protective member illustrated in FIG. 4;
FIG. 9 is a cross-sectional view taken along line I-I' of FIG. 8;
FIG. 10 is a cross-sectional view illustrating a modification of FIG. 9;
FIG. 11 is a perspective view illustrating a modified example of the sealing protective member illustrated in FIG. 6;
FIG. 12 is a perspective view illustrating a state in which a sealing protective member is coupled to a cell stack according to another embodiment of the present disclosure;
FIG. 13 is a cross-sectional view taken along line II-II' of FIG. 12;
FIG. 14 is a perspective view illustrating a state in which a sealing protective member is coupled to a cell stack according to another embodiment of the present disclosure;
FIG. 15 is a cross-sectional view taken along line III-III' of FIG. 14;
FIG. 16 is an exploded perspective view of a battery module according to another embodiment of the present disclosure; and
FIG. 17 is a cross-sectional view taken along line IV-IV' of FIG. 16.

### DETAILED DESCRIPTION

Prior to the description of the present disclosure, terms and words used in the present specification and claims to be described below should not be construed as limited to ordinary or dictionary terms, and should be construed in accordance with the technical idea of the present disclosure based on the principle that the inventors can properly define their own inventions in terms of terms in order to best explain the invention. Therefore, the embodiments described in the present specification and the configurations illustrated in the drawings are merely the most preferred embodiments of the present disclosure and are not intended to represent all of the technical ideas of the present disclosure, and thus should be understood that various equivalents and modifications may be substituted at the time of the present application.

Hereinafter, preferred embodiments of the present disclosure will be described in detail with reference to the accompanying drawings. In this case, in the drawings, the same components are denoted by the same reference symbols as possible. Further, the detailed description of well-known functions and constructions which may obscure the gist of the present disclosure will be omitted. For the same reason, some of the elements in the accompanying drawings are exaggerated, omitted, or schematically illustrated, and the size of each element does not entirely reflect the actual size.

In addition, in the present specification, the expressions such as an upper side, a lower side, a side face, and the like, are described based on the drawings and may be expressed differently when the direction of the corresponding object is changed.

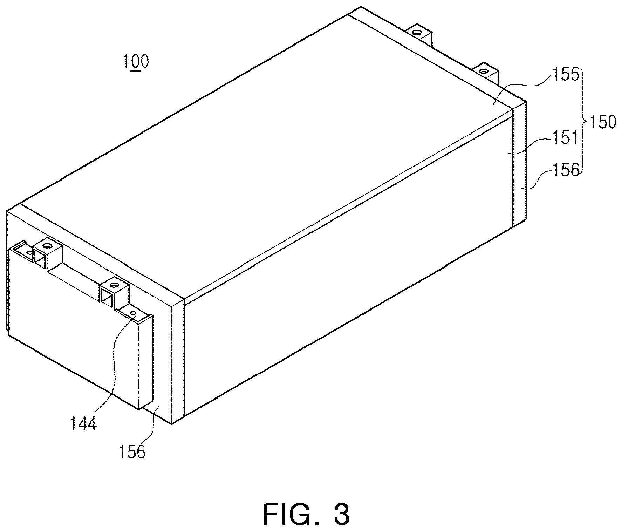

First, a battery module 100 according to an embodiment of the present disclosure is described with reference to FIGS. 3 to 11.

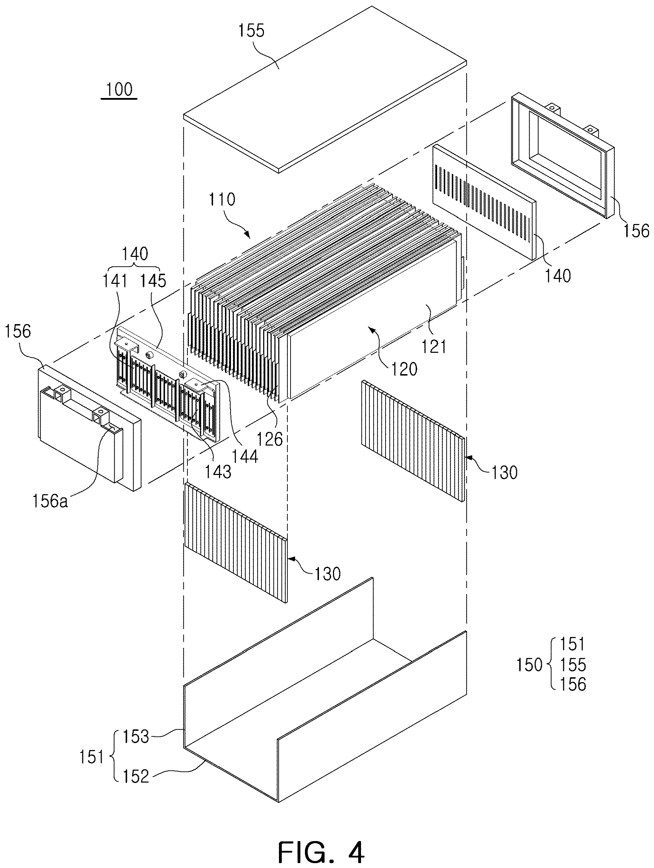

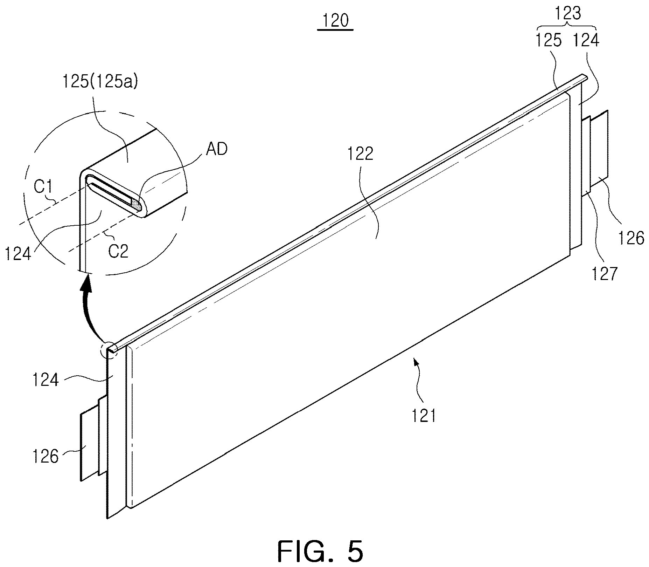

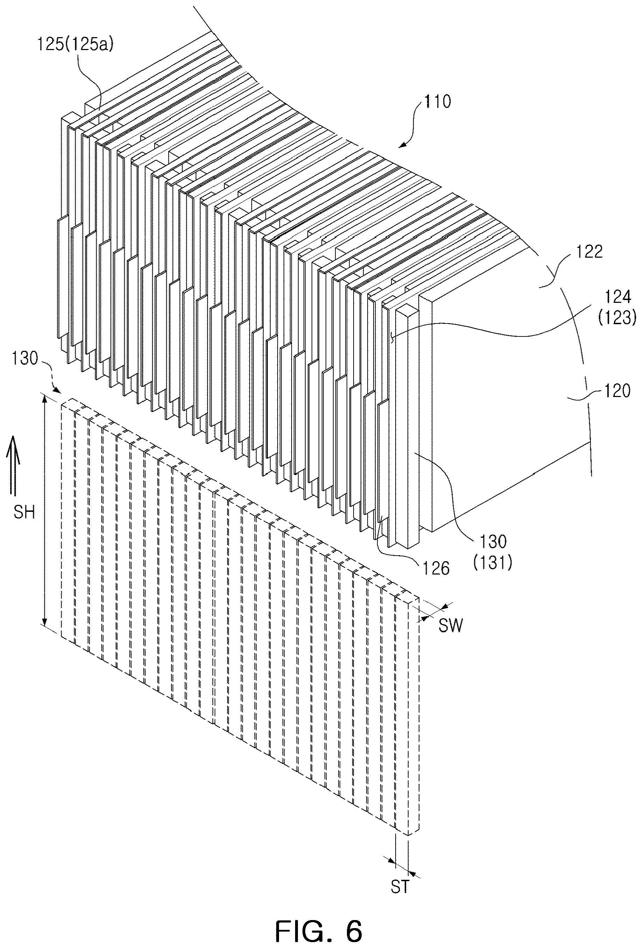

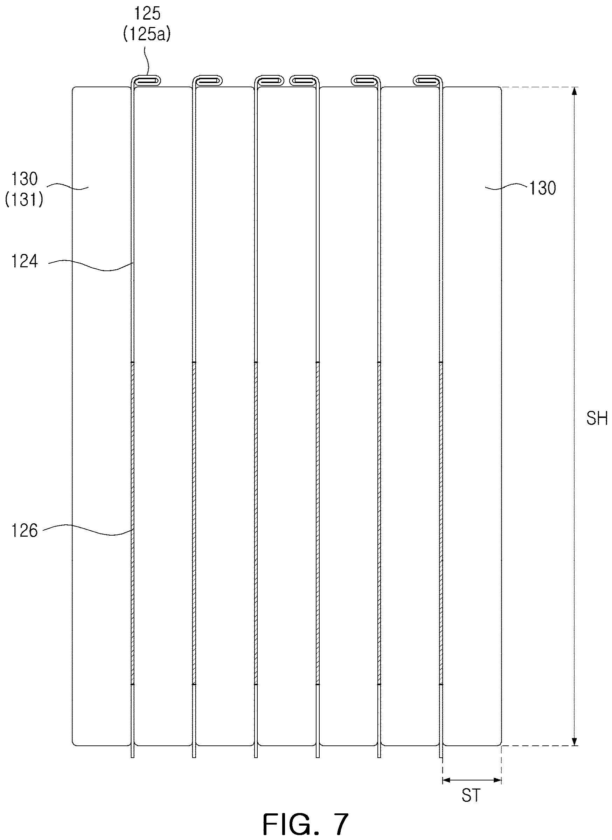

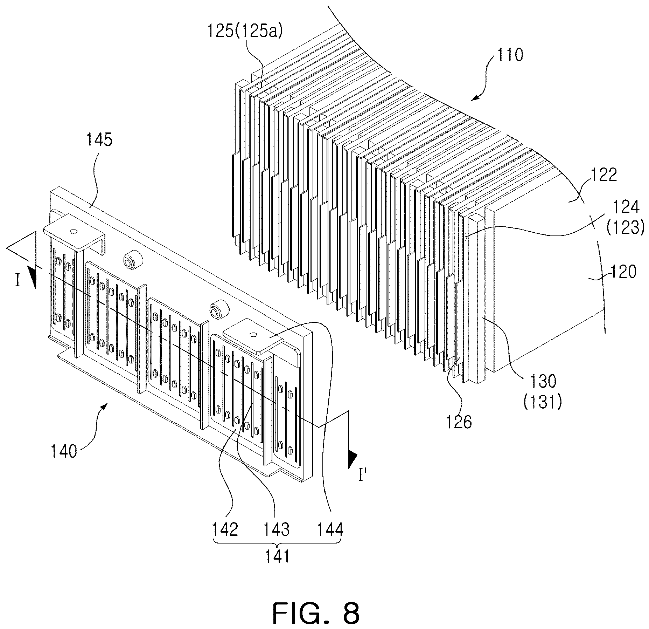

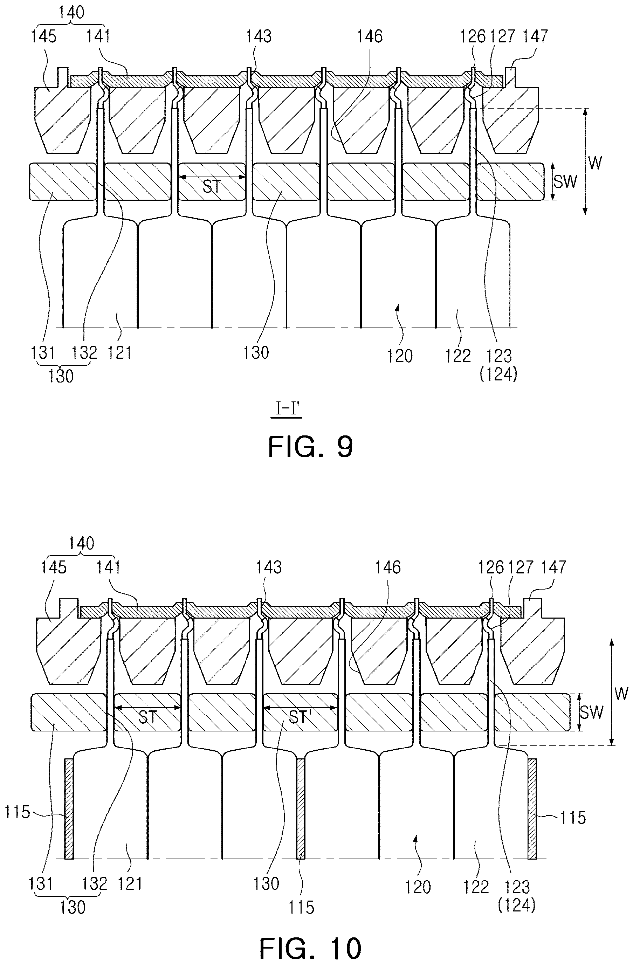

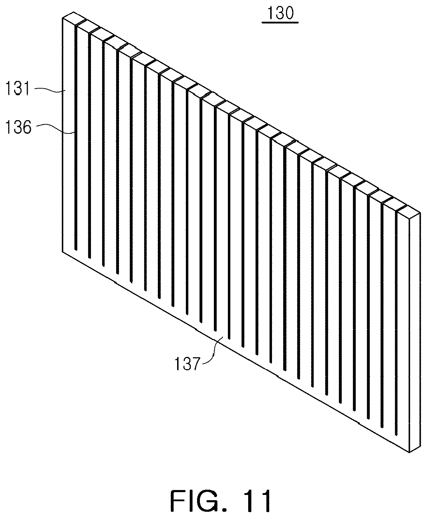

FIG. 3 is a perspective view of a battery module 100 according to an embodiment of the present disclosure, FIG. 4 is an exploded perspective view of the battery module 100 illustrated in FIG. 3, FIG. 5 is a perspective view of a pouch-type battery cell 120 illustrated in FIG. 4, FIG. 6 is a perspective view illustrating a coupling relationship between a cell stack 110 and a sealing protective member 130 illustrated in FIG. 4, and FIG. 7 is a front view of a combination of the cell stack 110 and the sealing protective member 130 illustrated in FIG. 6 from a plane, perpendicular to a length direction of the cell stack 110. Also, FIG. 8 is a perspective view illustrating a bus bar assembly 130, the cell stack 110, and the sealing protective member 130 illustrated in FIG. 4, FIG. 9 is a cross-sectional view taken along line I-I' of FIG. 8, FIG. 10 is a cross-sectional view illustrating a modification of FIG. 9, and FIG. 11 is a perspective view illustrating a modified example of the sealing protective member 130 illustrated in FIG. 6.

The battery module 100 according to an embodiment of the present disclosure may include the cell stack 110 formed by stacking a plurality of pouch-type battery cells 120, a module housing 150 accommodating the cell stack 110 therein, a bus bar assembly 140 having an electrically conductive bus bar 141, and a sealing protective member 130 positioned between the sealing portions 123 of the adjacent battery cells 120.

First, the cell stack 110 is configured by stacking a plurality of battery cells 120. In the present embodiment, the battery cells 120 are stacked in a left-right direction (or a horizontal direction). However, if necessary, it is also possible to configure the battery cells 120 to be stacked in a vertical direction.

Each battery cell 120 may include a pouch type secondary battery, that is, a pouch type battery cell, in which an electrode assembly (not shown) is accommodated in a pouch (casing) 121. The pouch-type battery cell 120 may include an electrode accommodation portion 122 accommodating the electrode assembly therein, a sealing portion 123 sealing at least a portion of the periphery of the electrode accommodation portion 122, and electrode leads 126 electrically connected to the electrode assembly.

The electrode assembly (not shown) includes a plurality of electrode plates and electrode tabs and is accommodated in the pouch 121. The electrode plate includes a positive plate and a negative plate. The electrode assembly may be configured in a form in which the positive and negative plates are stacked with a separator interposed therebetween in a state in which wide surfaces of the positive and negative plates face each other. The positive and negative plates may be formed in a structure in which an active material slurry is applied to a current collector. In general, the slurry may be formed generally by stirring a granular active material, auxiliary conductor, binder, plasticizer, and the like in a state in which a solvent is added. In addition, in the electrode assembly, a plurality of positive plates and a plurality of negative plates may be stacked in a left-right direction (or in a horizontal direction). Here, each of the plurality of positive and negative electrode plates includes electrode tabs, and each of the electrode tabs may be connected to the electrode leads 126 such that the same polarities are in contact with each other. In the case of the battery cell 120 illustrated in FIG. 5, two electrode leads 126 are illustrated as being disposed to face in opposite directions at both ends of the battery cell 120, but may also be disposed at one end portion of the battery cell 120 in the same direction and with different heights.

In addition, the pouch 121 is formed in the form of a container to provide an internal space in which the electrode assembly and an electrolyte (not shown) are accommodated. The pouch 121 may include an electrode accommodation portion 122 and a sealing portion 123. The electrode accommodation portion 122 may be formed in a container shape and provide an internal space having a certain shape in which the electrode assembly and the electrolyte are accommodated. The sealing portion 123 may be formed by bonding a portion of the pouch 121 and may be a portion sealing at least a portion of the periphery of the electrode accommodation portion 122. Therefore, the sealing portion 123 may be formed in the form of a flange extending outwardly from the electrode accommodation portion 122 formed in a container shape and may be disposed along the periphery of the electrode accommodation portion 122. A heat sealing (staking) method may be used for bonding the pouch 121 to form the sealing portion 123, but is not limited thereto.

A portion of the electrode leads 126 of the electrode assembly may be exposed externally of the sealing portion 123. In the present embodiment, the sealing portion 123 may include a first sealing portion 124 in which the electrode lead 126 is disposed and a second sealing portion 125 in which the electrode lead 126 is not disposed. Here, the electrode leads 126 may be covered by the insulating portion 127 so as to increase a sealing property (degree) of the first sealing portion 124 in a position where the electrode leads 126 are drawn out and at the same time secure an electrical insulation state.

Also, referring to FIGS. 9 and 10, a curved portion having a curved or bent shape (e.g., U-shape) may be formed in the insulating portion 127 or the electrode lead 126. Such a curved portion may absorb shock when external vibration or shock occurs while the electrode lead 126 is coupled to the bus bar 141 through welding. Accordingly, the curved portion may minimize damage to a coupling state of the electrode lead 126 and the bus bar 141 or damage to the electrode lead 126 itself.

In the present embodiment, the pouch 121 may be formed through a forming process using a single film casing. More specifically, after forming one or two accommodation portions in a sheet of a film casing by a forming process, the pouch 121 may be completed by folding the film casing so that the accommodation portion forms one space (that is, the electrode accommodation portion 122).

In the present embodiment, the electrode accommodation portion 122 may be formed in a rectangular shape. In addition, a sealing portion 123 formed by bonding a film casing is provided on an outer portion of the electrode accommodation portion 122. However, as described above, it is not necessary to form the sealing portion 123 on the surface on which the film casing is folded. Therefore, in the present embodiment, the sealing portion 123 is provided only on three out of the four surfaces constituting the outer circumference of the electrode accommodation portion 122, and the sealing portion 123 may not be disposed in any one surface (a lower surface in FIG. 5) of the outer portion of the electrode accommodation portion 122.

In the present embodiment, since the electrode leads 126 are disposed to face in opposite directions, the two electrode leads 126 are disposed on the sealing portions 123 formed on different sides. Therefore, the sealing portion 123 of the present embodiment includes two first sealing portions 124 in which the electrode leads 126 are disposed and one second sealing portion 125 in which the electrode lead 126 is not disposed. In FIG. 5, the second sealing portion 125 is illustrated to be formed on an upper surface of the pouch 121, but the second sealing portion 125 may also be formed on a lower surface of the pouch 121.

In addition, in the battery cell 120 of the present embodiment, in order to increase bonding reliability of the sealing portion 123 and minimize an area of the sealing portion 123, the sealing portion 123 may be formed to be folded at least once. More specifically, the second sealing portion 125 in which the electrode lead 126 is not disposed among the sealing portions 123 according to the present embodiment may be folded twice and then fixed by an adhesive member AD to form a bending portion 125a. For example, the second sealing portion 125 may be folded 180° along a first curved line C1 and then folded along a second curved line C2. Here, the inside of the second sealing portion 125 may be filled with the adhesive member AD, and the shape of the second sealing portion 125 folded twice may be maintained by the adhesive member AD. The adhesive member AD may be formed of an adhesive having high thermal conductivity. For example, the adhesive member AD may be formed of epoxy or silicone, but is not limited thereto.

The battery cell 120 configured as described above may be a nickel metal hydride (Ni-MH) battery or a lithium ion (Li-ion) battery that may be charged or discharged.

Meanwhile, in the embodiment of the present disclosure, the battery cell 120 is not limited to a pouch-type secondary battery having a three-sided sealing structure in which the sealing portion 123 is formed on three sides by folding a sheet of the film casing illustrated in FIG. 5.

For example, the battery cell 120 may be configured as a pouch-type secondary battery in which the electrode accommodation portion 122 is formed by overlapping two film casings and the sealing portion 123 is formed on all four sides of the electrode accommodation portion 122. In the case of a four-sided sealing structure, the sealing portion 123 may include two first sealing portions 124 in which the electrode leads 126 are disposed and two second sealing portions 125 in which the electrode lead 126 is not disposed. Here, each of the two second sealing portions 125 may have a bending portion 125a to improve a sealing degree.

Meanwhile, in order to maintain a shape of the cell stack 110, adjacent battery cells 120 may be attached to each other by a double-sided tape (not shown). The double-sided tape is attached to the side (wider surface) of the battery cell 120 to fix the plurality of battery cells 120 to each other.

In addition, at least one buffer pad (115 of FIG. 10) may be disposed in the cell stack 110. The buffer pad 215 may be disposed between the battery cell 120 and a sidewall of the module housing 150, and may also be disposed between the battery cells 120. The buffer pad 115 may be compressed and elastically deformed when a specific battery cell 100 expands due to a swelling phenomenon, thereby suppressing expansion of the entire volume of the cell stack 110. To this end, the buffer pad 115 may be formed of a polyurethane foam, but the material is not limited thereto.

The module housing 150 may form the exterior of the battery module 100 and accommodates the cell stack 110 therein. That is, the module housing 150 is disposed outside the cell stack 110 to protect the battery cells 120 from an external environment.

The module housing 150 may include, for example, a housing body 151 having a cross-sectional shape with one side open and a housing cover 155 combined with the housing body 151 to form an internal space.

In addition, the module housing 150 may have a structure in which the end plate 156 is coupled to the front and rear surfaces of the module housing 150 in the length direction to cover the internal space formed by the housing body 151 and the housing cover 155.

The cell stack 110 may be disposed in the internal space of the module housing 150. At least one surface constituting the module housing 150 may function as a heat dissipation plate dissipating heat generated by the battery cell 120 externally.

In order to form a U-shaped cross-section with one side open, the housing body 151 may include a lower plate 152 supporting a lower portion of the cell stack 110 and side plates 153 extending from both ends of the lower plate 152 in an up-down direction (upper side in FIG. 4) and supporting side surfaces of the cell stack 110.

In this case, the housing body 151 may have a structure in which the lower plate 152 and the side plate 153 are integrally formed. In addition, the housing body 151 may have a constant cross-sectional shape in a length direction, and in this case, the housing body 151 may be manufactured by an extrusion process. However, it is also possible to configure the side plates 153 and the lower plate 152 as independent components as needed and coupling/bonding the side plates 153 and the lower plate 152 to configure the housing body 151.

The side plate 153 supports the side surfaces of the cell stack 110 corresponding to the sides (wide surfaces) of the cell stack 110 stacked in the left-right direction. In this case, the side surfaces of the battery cell 120 may be in direct contact with the side plates 153, but a heat dissipation pad or a buffer pad (115 in FIG. 10) may be interposed between the side plates 153 and the side surfaces of the cell stack 110.

Also, the housing cover 155 may be disposed to face the lower plate 152 and may be connected to upper ends of the side plates 153. Therefore, when the housing cover 155 is coupled to the housing body 151 to cover the side plate 153, the housing cover 155 and the housing body 151 may have a shape of a hollow tubular member.

The housing body 151 may be formed of a material having high thermal conductivity, such as metal. For example, the housing body 151 may be formed of aluminum. However, the material of the housing body 151 is not limited thereto, and a variety of materials may be used as long as the material has strength and thermal conductivity similar to those of metal, even if it is not a metal. Also, like the housing body 151, the housing cover 155 may be formed of a material having high thermal conductivity, such as metal. As an example, the housing cover 155 may be formed of aluminum. However, the material of the housing cover 155 is not limited thereto, and a variety of materials may be used as long as the material has strength and thermal conductivity similar to those of metal, even if it is not metal.

In addition, the coupling of the housing body 151 and the housing cover 155 may be performed by welding (e.g., laser welding, etc.) contact surfaces of the side plate 153 and the housing cover 155. However, the coupling of the housing body 151 and the housing cover 155 is not limited to the welding coupling described above, and various modifications may be made such as coupling by sliding method or bonding, coupling using fixing members such as bolts or screws, etc.

Meanwhile, the end plates 156 may be configured to cover both sides on which the electrode leads 126 of the battery cell 120 are disposed, that is, the open front and rear surfaces of the module housing 150. As illustrated in FIG. 2, the end plates 156 may be coupled to the housing body 151 and the housing cover 155 to form the exterior of the battery module 100 together with the housing body 151 and the housing cover 155.

The end plate 156 may be formed of a metal such as aluminum and may be manufactured by a process such as die casting or extrusion/pressing. In addition, the end plate 156 may have a through hole 156a exposing a connection terminal 144 of the bus bar assembly 140 externally, which will be described later. The end plate 156 may be coupled to the housing body 151 and the housing cover 155 through fixing members such as screws or bolts. However, the coupling method of the end plate 156 is not limited thereto.

Referring to FIGS. 4 and 8 to 10, the bus bar assembly 140 may be interposed between the end plate 156 and the cell stack 110. The bus bar assembly 140 may include an electrically conductive bus bar 141 electrically connected to the electrode lead 126 of the battery cell 120 and an electrically insulating support plate 145.

The bus bar assembly 140 is coupled to one or both surfaces of the battery cell 120 on which the electrode leads 126 are disposed. The electrode leads 126 pass through a body of the bus bar assembly 140 and are interconnected with the same polarity by the bus bar 141 outside the bus bar assembly 140. To this end, a plurality of coupling holes 143 through which the electrode leads 126 penetrate may be formed in the bus bar assembly 140. The electrode leads 126 and the bus bar 141 may be coupled by welding in a state in which the electrode lead 126 passes through the coupling holes 143, that is, a state in which the electrode lead 126 protrudes externally of the bus bar 141.

In addition, the bus bar assembly 140 may include a connection terminal 144 for electrical connection with the outside. Accordingly, the battery cell 120 may be electrically connected externally through the connection terminal 144, and to this end, the electrode lead 126 may be electrically connected to the connection terminal 144 through a circuit wiring (not shown) provided in the bus bar assembly 140. The circuit wiring may perform electrical connection according to series/parallel connection of modules through the bus bar 141 formed of copper. The connection terminal 144 is exposed externally through a through hole 156a formed at the end plate 156 as illustrated in FIG. 4. Accordingly, the through hole 156a of the end plate 156 may be formed to have a size corresponding to a size and shape of the connection terminal 144.

The support plate 145 is disposed between the electrode accommodation portion 122 and the electrically conductive bus bar 141 to support the bus bar 141 and is formed so that the electrode lead 126 passes therethrough. That is, the electrode leads 126 may be connected to the coupling holes 143 formed at the bus bar 141 after passing through the support plate 145. A partition protrusion 147 supporting a side surface of the bus bar 141 may be formed on the support plate 145.

The sealing protective member 130 is positioned between the sealing portions 123 of adjacent battery cells 120 and is disposed to contact the sealing protective member 130. One side and the other side of the sealing portion 123 of the battery cell 120 are in contact with the sealing protective member 130. That is, the sealing protective member 130 may be in contact with each of the sealing portions 123 in the plurality of battery cells 120 constituting the cell stack 110. Therefore, the sealing protective member 130 prevents a fused (sealed) portion of the sealing portion 123 from being opened by an internal pressure of the battery cell 120 to minimize sealing of the sealing portion 123 from being released.

In addition, the sealing protective member 130 may be disposed between the sealing portions 123 of the adjacent battery cells 120 to be in close contact with the sealing portions 123. When the sealing protective member 130 is in close contact with the sealing portion 123, deformation of the sealing portion 123 may be reliably restricted, compared to a case in which the sealing protective member 130 is in contact with the sealing portion 123 between the sealing portions 123 of the battery cells 120.

As described above, the sealing portion 123 may include a first sealing portion 124 formed in a region in which the electrode lead 126 is exposed externally and a second sealing portion 125 formed in a region in which the electrode lead 126 is not exposed externally. In this case, the sealing protective member 130 may be configured to contact the first sealing portion 124. For example, when the first sealing portion 124 is formed on both sides of the battery cell 120 in the width direction (length direction), the sealing protective member 130 may be formed to contact the sealing portion from both sides of the battery cell 120 in the width direction (length direction). As the sealing protective member 130 is in contact with the first sealing portion 125 in which the electrode lead 126 is exposed externally, a phenomenon in which the sealing portion 123 is deformed or unsealed by pressure occurring inside the battery cell 120 may be prevented, and thus, sealing of the battery cell 120 may be stably maintained.

In particular, the second sealing portion 125 may be configured to include the bending portion 125a bent at least once in order to improve a sealing degree. For example, in the case of the three-sided sealing structure illustrated in FIG. 5, the second sealing portion 125 may be formed on any one of the upper portion and the lower portion of the battery cell 120 and the bending portion 125a may be formed at the second sealing portion 125. Meanwhile, since the first sealing portion 124 cannot form the bending portion 125a due to the electrode lead 126, it is relatively difficult to maintain sealing. However, according to an embodiment of the present disclosure, since both sides of the first sealing portion 124 contact the sealing protective member 130, the sealing degree of the first sealing portion 124 may be improved.

The sealing protective member 130 may be inserted between the sealing portions 123 of the adjacent battery cells 120 through a portion in which the bending portion 125a is not formed outside the battery cell 120. For example, as illustrated in FIG. 6, when the second sealing portion 125 and the bending portion 125a are formed at an upper portion of the battery cell 120, the sealing protective member 130 may be moved upwardly from a lower portion of the battery cell 120 so as to be disposed between the first sealing portions 124 of the battery cells 120 or the cell stack 110 may be moved downwardly so that the sealing protective member 130 is positioned between the first sealing portions 124 of the battery cell 120. In addition, in order to allow the sealing protective member 130 to be in close contact with the first sealing portion 124 of the battery cells 120 between the first sealing portions 124, the sealing protective member 130 may be press-fit between the first sealing portions 124 of the adjacent battery cells 120.

In order to arrange the plurality of sealing protective members 130 at once between the first sealing portions 124, the sealing protective members 130 may be fixed by a jig (not shown) or configured to move together with the jig. In addition, as a method of fixing the position of the plurality of sealing protective members 130, various known methods, such as a method of using an adhesive tape or the like, as well as the method using a jig, may be used.

Meanwhile, it is also possible to position the sealing protective member 130 between the first sealing portion s124 of the battery cells 120 by using a method of sequentially stacking the battery cells 120 and the sealing protective member 130 one by one. For example, in the case of a four-sided sealing structure, the second sealing portions 125 are formed on the upper and lower portions of the battery cell 120 and the bending portion 125a is formed on each of the second sealing portions 125, and thus, when the sealing protective member 130 moves in an up-down direction of the sealing protective member 130, interference with the bending portion 125a occurs. In this case, as illustrated in FIG. 6, since the plurality of sealing protective members 130 cannot be mounted at once between the first sealing portions 124, a method of stacking the battery cell 120 and the sealing protective member 130 one by one may also be used.

In addition, as illustrated in FIG. 8, the sealing protective member 130 may be disposed on the outermost side of the cell stack 110 in a thickness direction (stacked direction of the cell stack 110), among the sealing protective members 130. In this case, the outermost sealing protective member 130 may be supported by an inner surface of the bus bar assembly 140, that is, an inner surface of the support plate 145. To this end, a structure for accommodating and supporting the outermost sealing protective member 130 may be formed at both end portions of the support plate 145. For example, in the cross-sections of FIGS. 9 and 10, both end portions of the left and right sides of the support plate 145 may extend toward the sealing protective member 130 to support the outermost sealing protective member 130.

According to an embodiment of the present disclosure, since the sealing protective member 130 is in contact between the first sealing portions 124 of the adjacent battery cells 120 and between the first sealing portion 124 of the outermost battery cell 120 and the inner surface of the bus bar assembly 140, the first sealing portions 124 of all the battery cells 120 may be in contact with the sealing protective members 130 from both sides. That is, when the number of battery cells 120 constituting the cell stack 110 is n, the number of sealing protective members 130 may be n+1. In this case, in a state in which the first sealing portion 124 of the battery cell 120 and the sealing protective member 130 are coupled to the bus bar assembly 140, the sealing protective member 130 may be integrally connected in a direction, perpendicular to the first sealing portion 124. That is, the sealing protective member 130 fills a space between the first sealing portions 124. Therefore, if deformation occurs in a direction in which the first sealing portion 124 is opened in any one of the battery cells 120, deformation may be restricted by not only the sealing protective member 130 in direct contact with the first sealing portion 124 in which the deformation occurs but also by the sealing protective member 130 in contact with the first sealing portion 124 of the adjacent battery cell 120. That is, since the space between the first sealing portions 124 is filled, it has a shape similar to an integrated structure, and accordingly, a phenomenon in which sealing of the first sealing portion 124 is released may be minimized.

However, an object supported by the outermost sealing protective member 130 is not limited to the bus bar assembly 140. For example, the outermost sealing protective member 130 may be supported by the inner surface of the module housing 150, that is, the inner surface of the side plate 153. Also, in this case, the first sealing portion 124 and the sealing protective member 130 may be integrally connected in a direction, perpendicular to the first sealing portion 124, inside the module housing 150.

Referring to FIGS. 8 to 10, the cell stack 110 and the bus bar assembly 140 are coupled in a state in which the sealing protective member 130 is installed in the cell stack 110. Here, the sealing protective member 130 serves to support the sealing portion 123. Accordingly, the sealing protective member 130 may restrict a phenomenon in which the sealing portion 123 is pushed to be deformed when the cell stack 110 is connected to the bus bar assembly 140. That is, in the process in which the electrode lead 126 passes through the insertion hole 146 of the support plate 145 and is coupled to the coupling hole 143 of the bus bar 141, a phenomenon in which the sealing portion 123 is pushed toward the electrode accommodation portion 122 so as to be bent due to an external force applied thereto may be prevented.

Referring to FIGS. 6 to 10, the sealing protective member 130 may include a body portion 131 extending in the up-down direction of the battery cell 120 and a contact portion 132 in contact with the first sealing portion 124.

The contact portion 132 has a constant width SW and a height SH and is in contact with the first sealing portion 124 in an area corresponding to the product of the width SW and the height SH. The width SW of the contact portion 132 corresponds to a width in contact with the first sealing portion 124 in a cross section (refer to FIGS. 9 and 10), perpendicular to the up-down direction of the battery cell 120. The height SH of the contact portion 132 corresponds to a height at which the contact portion 132 contacts the first sealing portion 123 in a cross-section (cross-section corresponding to FIG. 7), perpendicular to a width direction (a length direction) of the battery cell 120.

In this case, the width SW of the contact portion 132 has a value of 3 mm or greater and may have a value smaller than the width W of the first sealing portion 124, with respect to the width direction (the length direction) of the battery cell 120 in a cross-section, perpendicular to the up-down direction of the battery cell,. If the width SW of the contact portion 132 is smaller than 3 mm, the width of the portion in which the contact portion 132 and the first sealing portion 124 are in contact or are in close contact with each other may be small, and in this case, releasing of the sealing of the first sealing portion 124 may not be sufficiently prevented if an internal pressure of the battery cell 120 is large. In addition, if the width SW of the contact portion 132 has a value greater than or equal to the width W of the first sealing portion 124, much space is required for the installation of the sealing protective member 130, running counter to the purpose of reducing the width W of the first sealing portion through the installation of the sealing protective member 130.

The height SH of the contact portion 132 may have a value of 50% or greater than an overall height of the first sealing portion 124 and may have a value smaller than the overall height of the first sealing portion 124. That is, the contact portion 132 may be configured to contact a significant portion of the first sealing portion 124 to prevent deformation of the first sealing portion 124. Here, the height of the first sealing portion 124 may be defined as a height from a lower end of the first sealing portion 124 to the bending portion 125a in a state in which the bending portion 125a is formed in the second sealing portion 125. If the height SH of the contact portion 132 is less than 50% of the height of the first sealing portion 124, the first sealing portion 124 may be deformed in a portion not in contact with the sealing protective member 130 to cause a problem that sealing is released. In addition, if the height SH of the contact portion 132 is equal to or greater than the overall height of the first sealing portion 124, the sealing protective member 130 increases more than necessary, resulting in loss of space inside the module housing 150. As an example, in order to increase a contact area between the contact portion 132 and the first sealing portion 124, the height SH of the contact portion 132 may be 80% or greater (preferably, 90% or greater) of the height of the first sealing portion 124.

In addition, since the electrode lead 126 is exposed externally through the first sealing portion 124, the sealing performance of the first sealing portion 124 may be deteriorated in the portion where the electrode lead 126 is exposed externally. In consideration of this, the sealing protective member 130 may be disposed in a region including a region corresponding to an exposed portion of the electrode lead 126 in the first sealing portion 124.

Meanwhile, since the sealing protective member 130 is installed in the first sealing portion 124 in which the electrode lead 126 is exposed externally, at least the outer surface of the sealing protective member 130 may be formed of an insulating material such as plastic or coated with an insulating material to secure insulating performance. That is, the sealing protective member 130 may be configured to be wholly formed of an insulating material or at least a portion thereof in contact with the first sealing portion 124 is insulated.

Referring to FIGS. 9 and 10, the sealing protective member 130 may have thicknesses ST and ST' corresponding to an interval between the first sealing portions 124 of the adjacent battery cells 120. For example, as illustrated in FIG. 9, when the interval between the first sealing portions 124 is constant, the thickness ST of the sealing protective member 130 may have a constant value. Meanwhile, as illustrated in FIG. 10, when the buffer pad 115 is disposed between the battery cells 120, a thickness ST' of the sealing protective member 130 in a portion in which the buffer pad 115 is disposed may be different from a thickness ST of the sealing protective member 130 in a portion in which the buffer pad 115 is not disposed. Also, the sealing protective member 130 installed between the first sealing portion 124 of the outermost battery cell 120 of the cell stack 110 and the inner surface of the bus bar assembly 140 or between the first sealing portion 124 and the inner surface of the module housing 150 may have a thickness corresponding to an interval between the first sealing portion 124 of the outermost battery cell 120 and a counterpart component.

Meanwhile, the sealing protective member 130 illustrated in FIG. 11 includes a plurality of insertion grooves 136 formed in an up-down direction from one side of the body portion 131 so that the sealing portions 123 of the battery cell 120 may be inserted thereinto. Here, one side of the body portion 131 may be divided by the insertion grooves 136, and the other side thereof may be integrally connected by the connection portion 137. In this manner, when the respective sealing protective members 130 disposed between the sealing portions 123 are integrated, the sealing protective member 130 may be easily installed between the plurality of battery cells 120 constituting the cell stack 110 at a time, thereby improving assembly workability.

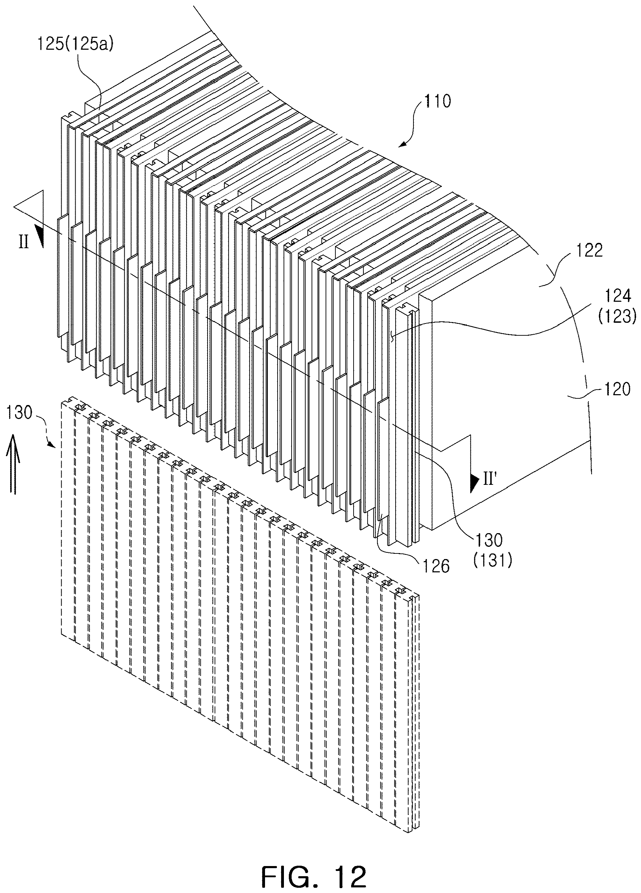

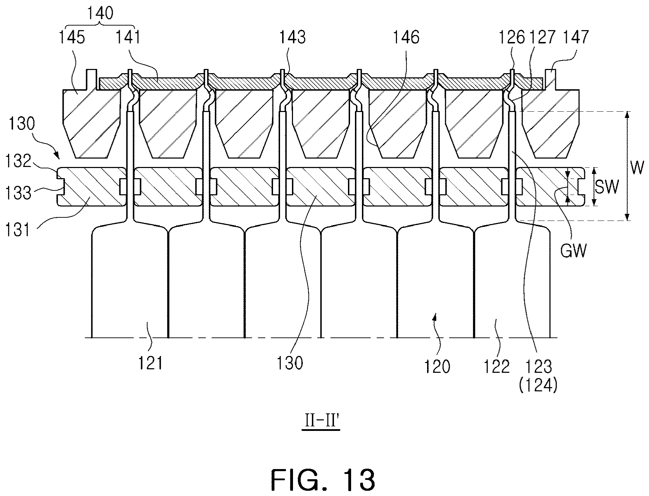

Next, the sealing protective member 130 according to another embodiment of the present disclosure will be described with reference to FIGS. 12 and 13.

FIG. 12 is a perspective view illustrating a state in which the sealing protective member 130 is coupled to the cell stack 110 according to another embodiment of the present disclosure, and FIG. 13 is a cross-sectional view taken along line II-II' of FIG. 12.

The sealing protective member 130 illustrated in FIGS. 12 and 13 is the same as the sealing protective member 130 described above with reference to FIGS. 3 to 11 in that it includes the body portion 131 extending in an up-down direction of the battery cell 120 and the contact portion 132 in contact with the sealing portion 123 at both sides of the body portion 131 in a thickness direction of the battery cell 120. Thus, in order to avoid unnecessary repetition, a detailed description thereof is omitted and the description will be replaced with the above description.

The contact portion 132 of the sealing protective member 130 illustrated in FIGS. 12 and 13 may include two or more portions spaced apart from each other in the width direction (the length direction) of the battery cell 120. That is, the body portion 131 may have depressions 133 formed in an up-down direction and contact portions 132 formed on both sides of the depressions 133. Accordingly, the sealing protective member 130 may be configured to contact the first sealing portion 124 in two or more portions through the contact portion 132.

As such, when the contact portion 132 of the sealing protective member 130 is formed of two or more contact surfaces, the contact portion 132 is in double or more contact with the sealing portion 123. Accordingly, even when contact is released from one of the contact surfaces, the contact may be maintained through the other contact surfaces, so that the sealing portion 123 may be prevented from being unsealed in an overlapping manner.

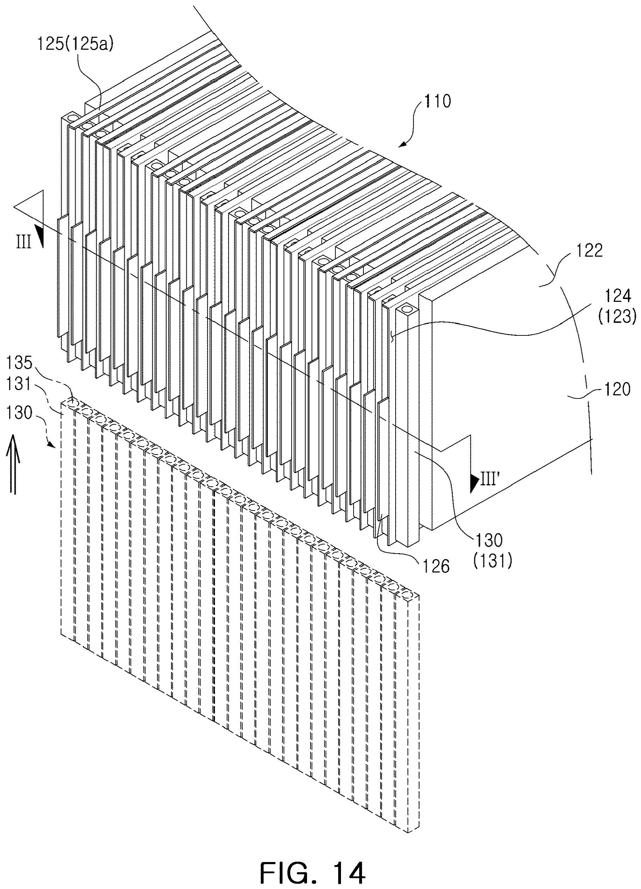

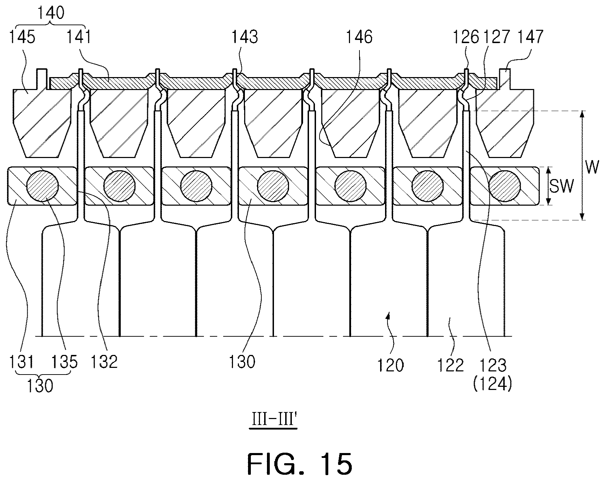

Next, the sealing protective member 130 according to another embodiment of the present disclosure is described with reference to FIGS. 14 and 15.

FIG. 14 is a perspective view illustrating a state in which the sealing protective member 130 is coupled to the cell stack 110 according to another embodiment of the present disclosure, and FIG. 15 is a cross-sectional view taken along line III-III' of FIG. 14.

The sealing protective member 130 illustrated in FIGS. 14 and 15 is the same as the sealing protective member 130 described above with reference to FIGS. 3 to 11 in that it includes the body portion 131 extending in an up-down direction of the battery cell 120 and the contact portion 132 in contact with the sealing portion 123 at both sides of the body portion 131 in a thickness direction of the battery cell 120. Thus, in order to avoid unnecessary repetition, a detailed description thereof is omitted and the description will be replaced with the above description.

The sealing protective member 130 illustrated in FIGS. 14 and 15 has a configuration in which an insertion member 135 having greater rigidity than the body portion 131 is disposed inside the body portion 131 in an up-down direction. The insertion member 135 may have a structure inserted into a hole formed in the body portion 131 or may have a structure integrally molded with the body portion 131 by insert molding. In addition, the body portion 131 may be formed of an insulating material such as plastic, and the insertion member 135 may be formed of a metal material having greater rigidity than plastic. As such, when the insertion member 135 is installed inside the body portion 131, the sealing protective member 130 may have greater rigidity so as to sufficiently resist deformation of the sealing portion 123.

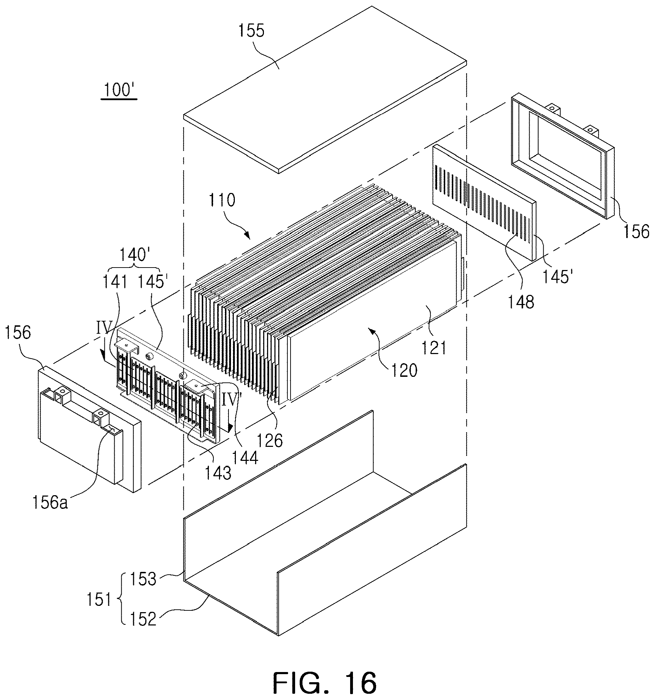

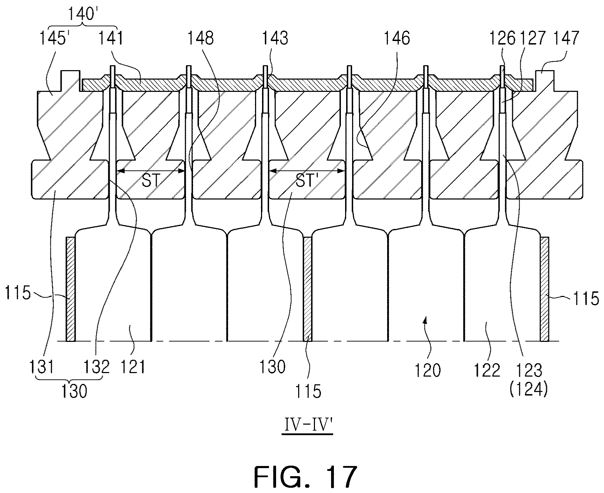

Finally, a battery module 100' according to another embodiment of the present disclosure is described with reference to FIGS. 16 and 17.

FIG. 16 is an exploded perspective view of a battery module according to another embodiment of the present disclosure, and FIG. 17 is a cross-sectional view taken along line IV-IV' of FIG. 16.

Similar to the battery module 100 described with reference to FIGS. 3 to 11, the battery module 100' illustrated in FIG. 16 may include a cell stack 110 formed by stacking a plurality of pouch-type battery cells 120, a module housing 150 accommodating the cell stack 110 therein, a bus bar assembly 140' having an electrically conductive bus bar 141, and a sealing protective member 130 positioned between sealing portions 123 of adjacent battery cells 120.

However, the battery module 100' illustrated in FIG. 16 is different only in that the sealing protective member 130 is integrally formed with the bus bar assembly 140'. Therefore, a detailed description of the same or similar components as those of the battery module 100 described above with reference to FIGS. 3 to 11 is omitted and replaced with the above description, and only differences are described.

Referring to FIG. 17, the bus bar assembly 140' includes an electrically conductive bus bar 141 and an electrically insulating support plate 145'. The electrically conductive bus bar 141 may have a plurality of coupling holes 143 through which the electrode leads 126 penetrate and is coupled. The electrically insulating support plate 145' may be disposed between the electrode accommodation portion 122 and the bus bar 141 to support the bus bar 141. The electrically insulating support plate 145' may have a plurality of insertion holes 146 through which the electrode leads 126 pass.

In this case, the sealing protective member 130 may be integrally formed with the support plate 145'. As such, when the sealing protective member 130 is integrally formed with the support plate 145', a process of installing the sealing protective member 130 between the sealing portions 123 of the cell stack 110 may be omitted, and thus, assembling workability of the battery module 100' may be improved.

In addition, when the sealing protective member 130 and the support plate 145' are integrally formed, the bus bar assembly 140' and the cell stack 110 may relatively move in the width direction (the length direction) of the battery cell 120 so that the bus bar 141 and the electrode lead 126 may be coupled to each other. Referring to FIG. 17, the electrode lead 126 of the battery cell 120 and the first sealing portion 124 are coupled to the coupling holes 143 of the bus bar 141 after passing through a space between the contact portions 132 of the sealing protective member 130 and the insertion holes 146 of the support plate 145'. Here, the electrode lead 126 may have a straight shape with the end not being bent as shown in FIG. 17 so that the electrode lead 126 may pass through the space between the contact portions 132 of the sealing protective member 130.

Since the sealing protective member 130 illustrated in FIGS. 16 and 17 is integrally formed with the support plate 145', the sealing protective member 130 behaves integrally with the bus bar assembly 140' when an external shock or vibration occurs. In addition, since the sealing protective member 130 is in contact with the sealing portion 123, a relative movement between the electrode lead 126 coupled to the coupling hole 143 and the bus bar 141 is restricted. That is, even when an external force occurs by shock or vibration in the cell stack 110, propagation of the external force to the electrode lead 126 is limited by the contact portion 132 in contact with the sealing portion 123. Therefore, in the case of the embodiment illustrated in FIGS. 16 and 17, a phenomenon in which a coupling force between the electrode lead 126 and the coupling hole 143 is degraded by shock or vibrations may be reduced even if a curved portion having a curved shape (e.g., U-shape) is not formed in the insulating portion 127 or the electrode lead 126. Accordingly, since a process of forming a curved portion on the insulating portion 127 or the electrode lead 126 is not required, workability may be improved.

As described above, according to the embodiments of the present disclosure, by configuring the sealing protective member 130 to be in contact with the sealing portion 123, sealing of the battery cell 120 may be maintained and internal pressure of the battery cell 120 may be resisted, while the width of the sealing portion 123 of the battery cell 120 is reduced. In addition, since the width of the sealing portion 123 may be reduced, a volume of the electrode assembly disposed in the internal space of the module housing 150 having the same size may be increased. Therefore, according to an embodiment of the present disclosure, the internal space of the module housing 150 may be effectively used and energy density of the battery modules 100 and 100' may be increased.

Although the embodiments of the present disclosure have been described in detail above, the scope of the present disclosure is not limited thereto and it will be apparent to those skilled in the art that various modifications and variations may be made without departing from the technical spirit of the present disclosure described in the claims.

For example, the embodiments described above may be implemented by deleting some components and each embodiment may be implemented in combination with each other. In particular, the embodiments described with reference to FIGS. 12 to 17 may be implemented in combination with at least some of the components of the embodiments described with reference to FIGS. 3 to 11.

## Claims

1. A battery module comprising:
a cell stack formed by stacking a plurality of pouch-type battery cells, each of the plurality of pouch-type battery cells including an electrode accommodation portion accommodating an electrode assembly therein, a sealing portion sealing at least a portion of a periphery of the electrode accommodation portion, and electrode leads electrically connected to the electrode assembly;
a module housing accommodating the cell stack therein;
a bus bar assembly having at least one conductive bus bar electrically connected to the electrode leads; and
at least one sealing protective member disposed between sealing portions of adjacent battery cells,
wherein the sealing protective member is disposed to be in contact with the sealing portions.

2. The battery module of claim 1, wherein the sealing portion includes a first sealing portion formed in a region from which the electrode leads are exposed externally and a second sealing portion formed in a region from which the electrode leads are not exposed externally, and the sealing protective member is in contact with the first sealing portion.

3. The battery module of claim 2, wherein the first sealing portion is formed on both side portions of the battery cell in a width direction, and the sealing protective member is positioned on both sides of the battery cell in the width direction.

4. The battery module of claim 2, wherein
the second sealing portion is formed in any one of an upper portion and a lower portion of the battery cell and includes a bending portion bent at least once, and
the sealing protective member is inserted into a space between the sealing portions of adjacent battery cells through a portion in which the bending portion is not formed, from the outside of the battery cell.

5. The battery module of claim 4, wherein the sealing protective member includes a body portion extending in an up-down direction of the battery cell, a plurality of insertion recesses is formed in an up-down direction from one side of the body portion so that the sealing portion is inserted thereinto, and one side of the body portion is divided by the plurality of insertion portions, and the other side thereof has an integrally connected structure.

6. The battery module of claim 2, wherein the sealing protective member includes a contact portion in contact with the first sealing portion, and a width of the contact portion along a width direction of the battery cell in a cross-section, perpendicular to the up-down direction of the battery cell, has a value of 3 mm or greater and has a value smaller than a width of the first sealing portion.

7. The battery module of claim 2, wherein the sealing protective member includes a contact portion in contact with the first sealing portion, and the contact portion is disposed in a region including a region corresponding to a portion of the first sealing portion from which the electrode leads are exposed externally.

8. The battery module of claim 7, wherein a height of the contact portion in a cross-section, perpendicular to a width direction of the battery cell, has a value of 50% or greater than an overall height of the first sealing portion and has a value smaller than the overall height of the first sealing portion.

9. The battery module of claim 1, wherein the sealing protective member is disposed to be in close contact with the sealing portions between the sealing portions of the adjacent battery cells.

10. The battery module of claim 9, wherein a sealing protective member disposed on the outermost side of the cell stack in a stacked direction of the cell stack, among the sealing protective members, is supported by an internal surface of the bus bar assembly or an internal surface of the module housing.

11. The battery module of claim 1, wherein the cell stack includes a buffer pad disposed between electrode accommodation portions of adjacent battery cells, and the sealing protective member has a thickness corresponding to a distance between the sealing portions of adjacent battery cells.

12. The battery module of claim 1, wherein
the sealing protective member includes a body portion extending in an up-down direction of the battery cell and a contact portion in contact with the sealing portion from both sides of the body portion in a thickness direction of the battery cell,
the contact portion includes two or more portions spaced apart from each other in a width direction of the battery cell, and
the sealing protective member is in contact with two or more portions of the sealing portion.

13. The battery module of claim 1, wherein
the sealing protective member includes a body portion extending in an up-down direction of the battery cell and a contact portion in contact with the sealing portion from both sides of the body portion in a thickness direction of the battery cell, and
an insertion member having rigidity greater than that of the body portion is disposed inside the body portion.

14. The battery module of claim 1, wherein
a plurality of coupling holes through which the electrode leads penetrate to be coupled are formed at the bus bar,
the bus bar assembly additionally includes an electrically insulating support plate disposed between the electrode accommodation portion and the conductive bus bar to support the bus bar,
a plurality of insertion holes through which the electrode leads penetrate are formed at the support plate, and
the sealing protective member is integrally formed with the support plate.

15. The battery module of claim 14, wherein
the electrode leads have a straight shape with an end not bent, and
the bus bar assembly and the cell stack relatively move in a width direction of the battery cell so that the bus bar and the electrode leads are coupled to each other.
